# EUROPÄISCHE PATENTSCHRIFT

(11) **EP 3 540 333 B1**
(45) Veröffentlichungstag und Bekanntmachung des Hinweises auf die Patenterteilung: **20.10.2021**
(21) Anmeldenummer: 18161918.0
(22) Anmeldetag: 15.03.2018
(51) Int. Cl.: F25B 1/10, F25B 15/00, F25B 15/04, F25B 25/02, F25B 15/12

(54) **SORPTIONSWÄRMEPUMPE UND SORPTIONSKREISPROZESS**
SORPTION HEAT PUMP AND SORPTION CIRCUIT PROCESS
POMPE À CHALEUR À ABSORPTION ET PROCÉDÉ DE CIRCUIT À ABSORPTION

(43) Veröffentlichungstag der Anmeldung: 18.09.2019
(73) Patentinhaber: AGO GmbH Energie + Anlagen, 95326 Kulmbach (DE)
(72) Erfinder: Ramming, Klaus, 95336 Mainleus (DE)
(74) Vertreter: Bauer, Dirk

(56) Entgegenhaltungen:
- EP-A1- 0 001 296
- EP-A1- 1 321 728
- EP-A1- 3 236 178
- DE-C- 953 378
- JP-A- 2015 025 628
- US-A- 3 817 050

## Beschreibung

Die Erfindung betrifft zunächst eine Sorptionswärmepumpe mit einem gasförmigen Kältemittel und einem flüssigen Lösungsmittel, einer armen und einer reichen Lösung, wobei die arme und die reiche Lösung einphasige Mischungen des Lösungsmittels und des Kältemittels sind, sowie mit einem Absorber, in dem die arme Lösung das Kältemittel absorbiert und dabei Wärme abgibt, einem Drosselelement, das die reiche Lösung nach Austritt aus dem Absorber entspannt, einem Austreiber, in dem die reiche Lösung nach Austritt aus dem Drosselelement einen von außen zugeführten Wärmestrom aufnimmt und dabei das Kältemittel austreibt, einem Förderelement, das das Kältemittel nach Austritt aus dem Austreiber in den Absorber fördert, und einer Pumpe, die die arme Lösung nach Austritt aus dem Austreiber in den Absorber pumpt. Die Erfindung betrifft weiterhin einen Sorptionskreisprozess mit einem gasförmigen Kältemittel und einem flüssigen Lösungsmittel, einer armen und einer reichen Lösung, wobei die arme und die reiche Lösung einphasige Mischungen des Lösungsmittels und des Kältemittels sind, und wobei die arme Lösung das Kältemittel absorbiert und dabei Wärme abgibt, dann die reiche Lösung erst entspannt wird, anschließend einen dem Sorptionskreisprozess von außen zugeführten Wärmestrom aufnimmt und dabei das Kältemittel austreibt, dann das Kältemittel aus der reichen Lösung ausgetrieben und gefördert, und die arme Lösung gepumpt und der Sorptionskreisprozess geschlossen wird.

Solche Sorptionswärmepumpen und -kreisprozesse sind bekannt aus DD 236979 A1 und DE 3808257 C1. In den bekannten Sorptionswärmepumpen und -kreisprozessen nimmt die arme Lösung vor Eintritt in den Absorber in einem Lösungswärmeübertrager Wärme aus der reichen Lösung zwischen Absorber und Drosselelement auf. Die arme Lösung beim Eintritt in den Absorber erreicht so höchstens das Temperaturniveau der austretenden reichen Lösung.

### Aufgabe

Der Erfindung liegt die Aufgabe zugrunde, die Temperatur der armen Lösung beim Eintritt in den Absorber zu erhöhen.

### Lösung

Ausgehend von den bekannten Sorptionswärmepumpen wird nach der Erfindung vorgeschlagen, parallel zu dem Absorber einen zweiten Absorber anzuordnen, in dem ein Teilstrom der armen Lösung vor Eintritt in den Absorber einen Teilstrom des Kältemittels vor Eintritt in den Absorber absorbiert und dabei an die arme Lösung vor Eintritt in den Absorber Wärme abgibt. Durch die Temperaturerhöhung der armen Lösung steigt das Temperaturniveau der Nutzwärme.

Vorzugsweise weist eine erfindungsgemäße Sorptionswärmepumpe einen zweiten Austreiber auf, in dem ein Teilstrom der reichen Lösung parallel zu dem Austreiber Wärme aus der reichen Lösung zwischen Absorber und Drosselelement aufnimmt. Die verbleibende reiche Lösung kann so in dem Austreiber Wärme auf einen niedrigeren Temperaturniveau aufnehmen.

Vorzugsweise weist eine erfindungsgemäße Sorptionswärmepumpe einen Lösungswärmeübertrager auf, in dem die arme Lösung vor Eintritt in den Absorber Wärme aus der reichen Lösung zwischen Absorber und Drosselelement aufnimmt. Durch einen solchen Lösungswärmeübertrager wird die energetische Effizienz weiter gesteigert.

Vorzugsweise weist eine erfindungsgemäße Sorptionswärmepumpe einen dritten Absorber auf, in dem die reiche Lösung vor dem Drosselelement einen Teilstrom des Kältemittels absorbiert und dabei Wärme an einen Teilstrom der armen Lösung nach Austritt aus dem Austreiber abgibt. Durch die Temperaturerhöhung der armen Lösung steigt das Temperaturniveau der Nutzwärme.

Vorzugsweise weist eine erfindungsgemäße Sorptionswärmepumpe einen Verdichter auf, der das gasförmige Kältemittel in den Absorber fördert. Sorptionswärmepumpen mit Verdichtern für das gasförmige Kältemittel sind allgemein bekannt.

Vorzugsweise weist eine solche Sorptionswärmepumpe einen zweiten Verdichter auf, der das gasförmige Kältemittel vorverdichtet, und einen dritten Austreiber, in dem das vorverdichtete Kältemittel vor Eintritt in den Verdichter an einen Teilstrom der reichen Lösung vor Eintritt in den Austreiber Wärme abgibt. So wird das Temperaturniveau der reichen Lösung im Austreiber erhöht und das Austreiben des Kältemittels unterstützt.

Alternativ vorzugsweise weist eine erfindungsgemäße Sorptionswärmepumpe einen Verflüssiger auf, der das Kältemittel nach Austritt aus dem Austreiber verflüssigt, eine Kältemittelpumpe, die das flüssige Kältemittel nach Austritt aus dem Verflüssiger in einen Verdampfer pumpt, in dem es vor Eintritt in den Absorber einen zweiten von außen zugeführten Wärmestrom aufnimmt und verdampft. Solche Sorptionswärmepumpen sind als Wärmetransformatoren allgemein bekannt: Sie zeichnen sich durch vier Hauptwärmeübertrager ― Absorber und Verdampfer auf Hochdruck-, und Austreiber und Verflüssiger auf Niederdruckniveau - sowie je eine Kältemittel- und eine Lösungsmittelpumpe und ein Drosselelement für die reiche Lösung zwischen den Druckniveaus aus. Dem Austreiber und dem Verdampfer wird Wärme auf einem mittleren Temperaturniveau von Außen zugeführt, der Absorber gibt Nutzwärme auf einem höheren und der Verflüssiger Abwärme auf einem niedrigeren Temperaturniveau ab. Wärmetransformatoren werden daher auch als "Wärmestromspalter" bezeichnet.

Vorzugsweise ist in einer erfindungsgemäßen Sorptionswärmepumpe das Lösungsmittel Wasser und das Kältemittel Ammoniak. Wasser und Ammoniak sind natürliche Stoffe und haben sich in der Kältetechnik bewährt.

Ausgehend von den bekannten Sorptionskreisprozessen wird nach der Erfindung vorgeschlagen, dass vor Absorption des Kältemittels ein Teilstrom der armen Lösung und ein Teilstrom des Kältemittels abgezweigt und parallel zur Absorption des Kältemittels der Teilstrom der armen Lösung den Teilstrom des Kältemittels absorbiert und dabei an die arme Lösung vor Absorption des Kältemittels Wärme abgibt. Das erfindungsgemäße Verfahren könnte der vorstehend beschriebenen Sorptionswärmepumpen ausgeführt und zeichnet sich gleichermaßen durch die dort aufgeführten Vorteile aus.

### Ausführungsbeispiele

Die Erfindung wird nachfolgend anhand von Ausführungsbeispielen erläutert. Es zeigen
- Fig. 1: eine erste erfindungsgemäße Sorptionswärmepumpe,
- Fig. 2: eine zweite erfindungsgemäße Sorptionswärmepumpe,
- Fig. 3: eine dritte erfindungsgemäße Sorptionswärmepumpe,
- Fig. 4: eine vierte erfindungsgemäße Sorptionswärmepumpe,
- Fig. 5: eine fünfte erfindungsgemäße Sorptionswärmepumpe und
- Fig. 6: eine sechste erfindungsgemäße Sorptionswärmepumpe.

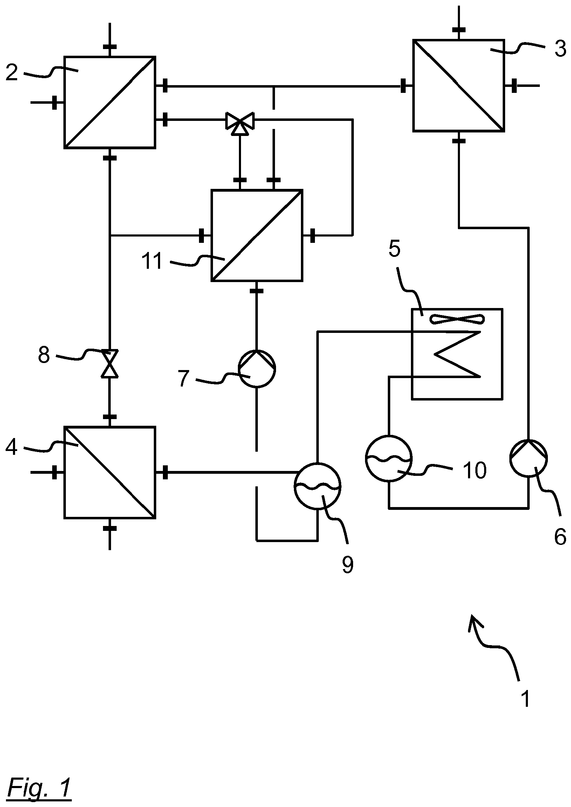

Die in Figur 1 gezeigte erste erfindungsgemäße Sorptionswärmepumpe 1 weist einen Absorber 2, einen Verdampfer 3, einen Austreiber 4, einen Verflüssiger 5, eine Kältemittelpumpe 6, eine Lösungsmittelpumpe 7 und ein Drosselelement 8 auf.

Die erfindungsgemäße Sorptionswärmepumpe 1 eignet sich zur Nutzung als Wärmetransformator, in dem eine reiche Lösung - mit Ammoniak als Kältemittel hoch angereichertes Wasser als Lösungsmittel - auf einem Niederdruckniveau in dem Austreiber 4 durch einen von außen zugeführten Wärmestrom aufgeheizt wird und in einem anschließenden Abscheider 9 gasförmiges Kältemittel austreibt.

Das Kältemittel gibt in dem Verflüssiger 5 Wärme an die Umgebung ab, wird in einem weiteren anschließenden Abscheider 10 verflüssigt und mittels der Kältemittelpumpe 6 auf ein Hochdruckniveau in den Verdampfer 3 gepumpt. In dem Verdampfer 3 nimmt das Kältemittel aus einem zweiten von außen zugeführten Wärmestrom Verdampfungswärme auf und strömt gasförmig in den Absorber 2.

Die in dem ersten Abscheider 9 verbliebene arme Lösung wird mittels der Lösungsmittelpumpe 7 gleichfalls auf das Hochdruckniveau in den Absorber 2 gepumpt. In dem Absorber 2 absorbiert die arme Lösung das gasförmige Kältemittel und gibt dabei einen Nutzwärmestrom ab. Die reiche Lösung wird im Drosselelement 8 wieder auf das Niederdruckniveau entspannt und in den Austreiber 4 geführt und schließt den Kreisprozess.

In einem dem Absorber 2 parallel angeordneten zweiten Absorber 11 absorbiert ein Teilstrom der in den Absorber 2 geführten armen Lösung einen Teilstrom des in den Absorber 2 einströmenden Kältemittels. Die dabei freiwerdende Wärme wird genutzt, um das Temperaturniveau des in den Absorber 2 einströmenden verbleibenden Reststroms der armen Lösung anzuheben.

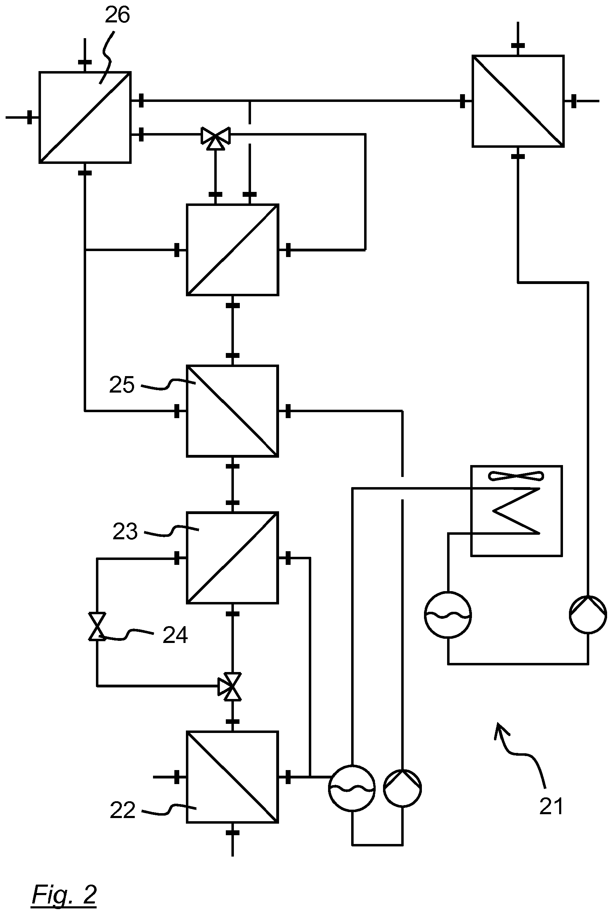

Die in Figur 2 dargestellte zweite erfindungsgemäße Sorptionswärmepumpe 21 entspricht zunächst im Wesentlichen der ersten Sorptionswärmepumpe 1. In einem dem Austreiber 22 vorgeschalteten zweiten Austreiber 23 gibt zusätzlich die reiche Lösung vor dem Drosselelement 24 Wärme an einen hinter dem Drosselelement 24 ausgekoppelten Teilstrom der reichen Lösung ab. In einem Lösungswärmeübertrager 25 nimmt außerdem die arme Lösung vor Eintritt in den Absorber 26 Wärme aus der reichen Lösung zwischen Absorber 26 und Drosselelement 24 auf.

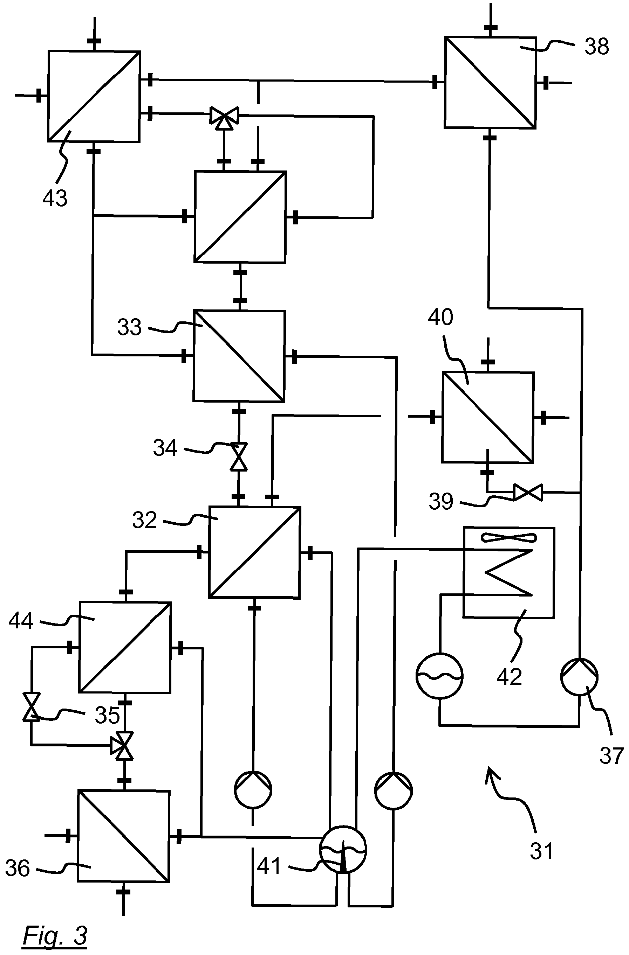

Die in Figur 3 dargestellte dritte erfindungsgemäße Sorptionswärmepumpe 31 entspricht zunächst im Wesentlichen der zweiten Sorptionswärmepumpe 21. Zusätzlich weist die dritte Sorptionswärmepumpe 31 einen dritten Absorber 32 auf einem Zwischendruckniveau zwischen dem Hochdruck- und dem Niederdruckniveau auf. Nach Austritt aus dem Lösungswärmeübertrager 33 wird die reiche Lösung mit einem zweiten Drosselelement 34 zunächst auf das Zwischendruckniveau entspannt, absorbiert in dem dritten Absorber 32 einen Teilstrom des Kältemittels und wird über das Drosselelement 35 erst dann in den Austreiber 36 geführt. Der Teilstrom wird hierzu aus dem Kältemittel zwischen der Kältemittelpumpe 37 und dem Verdampfer 38 über ein weiteres Drosselelement 39 ausgekoppelt und in einem zweiten Verdampfer 40 unter Zufuhr eines weiteren von außen zugeführten Wärmestroms verdampft, die Absorptionswärme wird einem Teilstrom der hinter dem Austreiber 36 verbleibenden armen Lösung zugeführt, der anschließend in den Abscheider zurück zirkuliert.

Das Hochdruckniveau der dritten Sorptionswärmepumpe 31 liegt bei 19,3 *bar,* das Zwischendruckniveau bei 13,5 *bar.* In der dritten Sorptionswärmepumpe 31 wird dem Austreiber 36 75 % der reichen Lösung und von außen ein Heizmittel auf 58 °C zugeführt. Im Austreiber 36 wird die reiche Lösung auf 54 °*C* aufgeheizt und das Heizmittel auf 42 °*C* abgekühlt. Aus dem anschließenden Abscheider 41 wird die arme Lösung mit zwei Strömen bei 53 °*C* bzw. 58 °*C* abgezogen.

Das Kältemittel aus dem Abscheider 41 wird in dem Verflüssiger auf 18 °*C* abgekühlt. Auch dem Verdampfer 38 wird das Heizmittel auf 58 °*C* zugeführt. Dort gibt es Wärme an das Kältemittel auf dem Hochdruckniveau ab und kühlt dabei auf 42 °*C* ab. Das Kältemittel verlässt den Verdampfer 38 mit 48 °*C*.

In dem Absorber 43 absorbiert die arme Lösung das Kältemittel, heizt dabei einen Nutzwasserstrom von 70 °*C* auf 80 °*C* auf und verlässt den Absorber 43 als reiche Lösung mit 72 °*C*. Im Lösungswärmeübertrager 33 kühlt die reiche Lösung auf 63 °*C* ab und heizt dabei die arme Lösung auf 70 °*C* auf.

Im dritten Absorber 32 kühlt die reiche Lösung weiter auf 57 °*C* ab und heizt die aus dem Abscheider 41 umlaufende arme Lösung von 53 °*C* auf 58 °*C* auf. Hierzu absorbiert die reiche Lösung Kältemittel bei 39 °*C*. In dem zweiten Verdampfer 40 im Zwischendruckniveau nimmt das Kältemittel Wärme aus einem dritten Heizmittelstrom auf, der dabei von 42 °*C* auf 41 °*C* abkühlt.

In dem zweiten Austreiber 44 kühlt die reiche Lösung auf dem Zwischendruckniveau weiter auf 42 °*C* ab und heizt den auf dem Niederdruckniveau vor dem Austreiber 36 abgezweigten Teilstrom im Umfang von 25 % der reichen Lösung auf 52 °*C* auf.

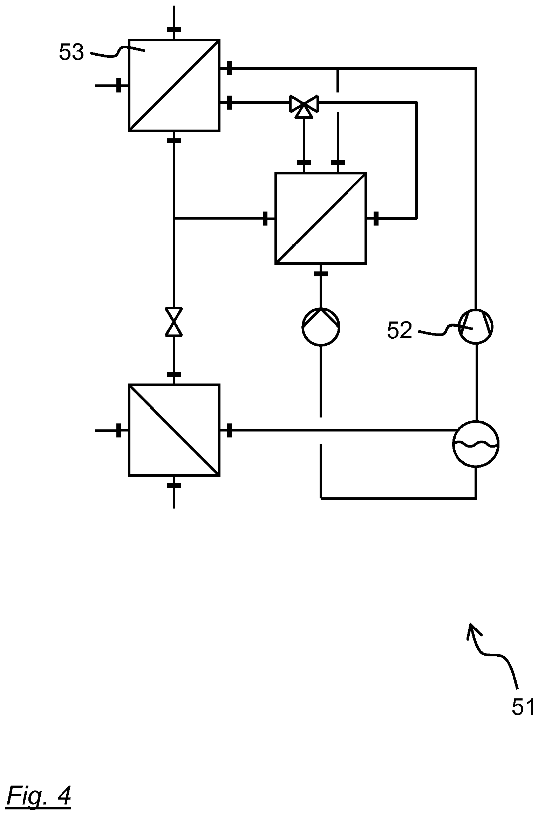

Die in Figur 4 dargestellte vierte erfindungsgemäße Sorptionswärmepumpe 51 entspricht zunächst im Wesentlichen der ersten Sorptionswärmepumpe 1. Das Kältemittel wird hier allerdings nicht verflüssigt, in flüssiger Form auf das Hochdruckniveau gepumpt, sondern gasförmig mittels eines Verdichters 52 in den Absorber 53 gefördert.

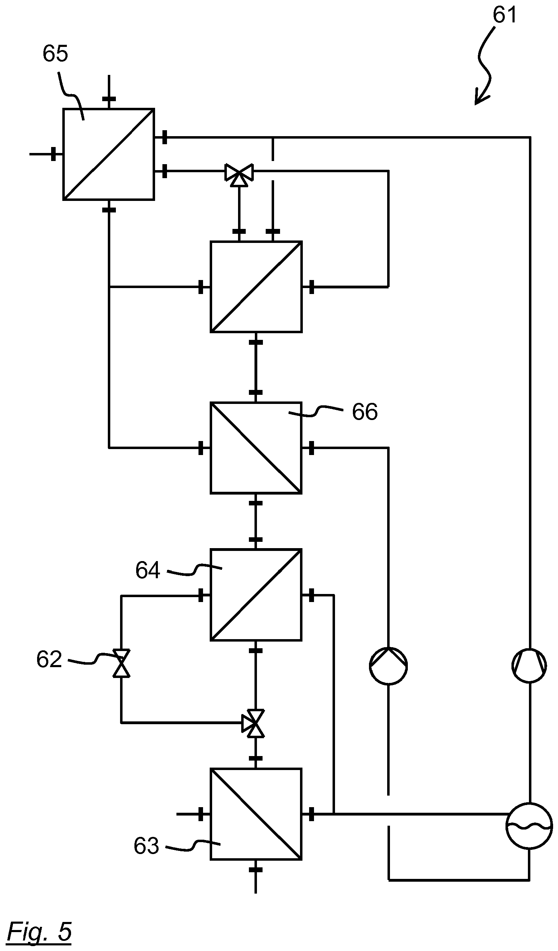

Die in Figur 5 dargestellte fünfte erfindungsgemäße Sorptionswärmepumpe 61 entspricht zunächst im Wesentlichen der vierten Sorptionswärmepumpe 51. Wie in der zweiten Sorptionswärmepumpe 21 gibt zusätzlich die reiche Lösung vor dem Drosselelement 62 in einem parallel zum Austreiber 63 angeordneten zweiten Austreiber 64 Wärme an einen hinter dem Drosselelement 62 ausgekoppelten Teilstrom der reichen Lösung ab. Auch hier nimmt außerdem die arme Lösung vor Eintritt in den Absorber 65 in einem Lösungswärmeübertrager 66 Wärme aus der reichen Lösung zwischen Absorber 65 und Drosselelement 62 auf.

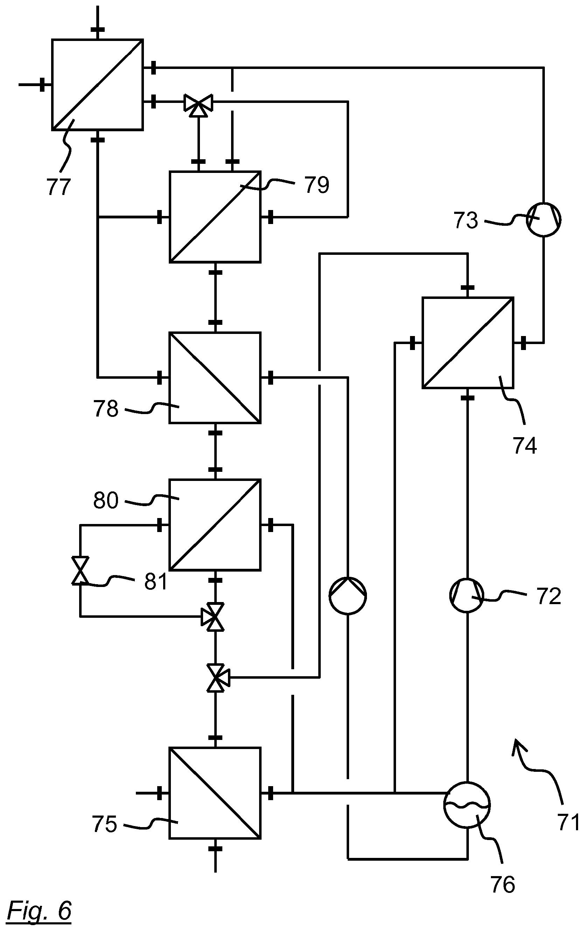

Die in Figur 6 dargestellte sechste erfindungsgemäße Sorptionswärmepumpe 71 entspricht zunächst im Wesentlichen der fünften Sorptionswärmepumpe 61. Wie in der dritten Sorptionswärmepumpe 31 wird das Kältemittel auf einem Zwischendruckniveau als Wärmespender für die reiche Lösung genutzt: Das Kältemittel wird in einem zweiten Verdichter 72 zunächst auf das Zwischendruckniveau vorverdichtet, gibt dann vor Eintritt in den Verdichter 73 in einem dritten Austreiber 74 Wärme an einen aus der reichen Lösung vor Eintritt in den Austreiber 75 ausgekoppelten Teilstrom der reichen Lösung ab.

Das Hochdruckniveau der sechsten Sorptionswärmepumpe 71 liegt bei 22 *bar,* das Zwischendruckniveau bei 10 *bar* und das Niederdruckniveau bei 3,4 *bar.* In der sechsten Sorptionswärmepumpe 71 wird dem Austreiber 75 69 % der reichen Lösung und von außen ein Heizmittel auf 90 °*C* zugeführt. Im Austreiber 75 wird die reiche Lösung auf 88 °*C* aufgeheizt und das Heizmittel auf 70 °*C* abgekühlt. Aus dem anschließenden Abscheider 76 wird die arme Lösung bei 90 °*C* abgezogen.

Das Kältemittel aus dem Abscheider 76 wird in dem zweiten Verdichter 72 auf 216 °*C* aufgeheizt, in dem dritten Austreiber 74 auf 130 °*C* abgekühlt und erreicht in dem Verdichter 73 wieder eine Temperatur von 230 °*C*. In dem dritten Austreiber 74 wird die reiche Lösung dabei auf 107 °*C* aufgeheizt.

In dem Absorber 77 absorbiert die arme Lösung das Kältemittel, heizt dabei ein Heizmedium von 140 °*C* auf 160 °*C* auf und verlässt den Absorber 77 als reiche Lösung mit 142 °*C*. Im Lösungswärmeübertrager 78 kühlt die reiche Lösung auf 101 °*C* ab und heizt dabei die arme Lösung auf 141 °*C* auf. Im zweiten Absorber 79 wird die arme Lösung weiter auf 156 °*C* aufgeheizt. Hierzu wird ein Teilstrom von 20 % der armen Lösung genutzt, der durch die Absorption erreicht die reiche Lösung hinter dem zweiten Absorber 79 ein Temperaturniveau von 145 °*C*.

In dem zweiten Austreiber 80 kühlt die reiche Lösung zunächst auf 71 °*C* ab und heizt dadurch einen hinter dem Drosselventil 81 mit 69 °*C* abgezweigten Teilstrom von 30 % der reichen Lösung auf 95 °*C*.

In den Figuren sind
- 1: Sorptionswärmepumpe
- 2: Absorber
- 3: Verdampfer
- 4: Austreiber
- 5: Verflüssiger
- 6: Kältemittelpumpe
- 7: Lösungsmittelpumpe
- 8: Drosselelement
- 9: Abscheider
- 10: weiterer Abscheider
- 11: zweiter Absorber
- 21: Sorptionswärmepumpe
- 22: Austreiber
- 23: zweiter Austreiber
- 24: Drosselelement
- 25: Lösungswärmeübertrager
- 26: Absorber
- 31: Sorptionswärmepumpe
- 32: dritter Absorber
- 33: Lösungswärmeübertrager
- 34: zweites Drosselelement
- 35: Drosselelement
- 36: Austreiber
- 37: Kältemittelpumpe
- 38: Verdampfer
- 39: weiteres Drosselelement
- 40: zweiter Verdampfer
- 41: Abscheider
- 42: Verflüssiger
- 43: Absorber
- 44: zweiter Austreiber
- 51: Sorptionswärmepumpe
- 52: Verdichter
- 53: Absorber
- 61: Sorptionswärmepumpe
- 62: Drosselelement
- 63: Austreiber
- 64: zweiter Austreiber
- 65: Absorber
- 66: Lösungswärmeübertrager
- 71: Sorptionswärmepumpe
- 72: zweiter Verdichter
- 73: Verdichter
- 74: dritter Austreiber
- 75: Austreiber
- 76: Abscheider
- 77: Absorber
- 78: Lösungswärmeübertrager
- 79: zweiter Absorber
- 80: zweiter Austreiber
- 81: Drosselventil

## Patentansprüche

1. Sorptionswärmepumpe (1, 21, 31, 51, 61, 71) mit einem gasförmigen Kältemittel und einem flüssigen Lösungsmittel, einer armen und einer reichen Lösung, wobei die arme und die reiche Lösung einphasige Mischungen des Lösungsmittels und des Kältemittels sind, sowie mit einem ersten Absorber (2, 26, 43, 53, 65, 77), in dem die arme Lösung das Kältemittel absorbiert und dabei Wärme abgibt, einem Drosselelement (8, 24, 35, 62), das die reiche Lösung nach Austritt aus dem ersten Absorber (2, 26, 43, 53, 65, 77) entspannt, einem Austreiber (4, 22, 36, 63, 75), in dem die reiche Lösung nach Austritt aus dem Drosselelement (8, 24, 35, 62) einen von außen zugeführten Wärmestrom aufnimmt und dabei das Kältemittel austreibt, einem Förderelement, das das Kältemittel nach Austritt aus dem Austreiber (4, 22, 36, 63, 75) in den ersten Absorber (2, 26, 43, 53, 65, 77) fördert, und einer Pumpe, die die arme Lösung nach Austritt aus dem Austreiber (4, 22, 36, 63, 75) in den ersten Absorber (2, 26, 43, 53, 65, 77) pumpt, ***gekennzeichnet durch*** einen parallel zu dem ersten Absorber (2, 26, 43, 53, 65, 77) angeordneten zweiten Absorber (11, 79), in dem ein Teilstrom der armen Lösung vor Eintritt in den ersten Absorber (2, 26, 43, 53, 65, 77) einen Teilstrom des Kältemittels vor Eintritt in den Absorber (2, 26, 43, 53, 65, 77) absorbiert und dabei an die arme Lösung vor Eintritt in den ersten Absorber (2, 26, 43, 53, 65, 77) Wärme abgibt.

2. Sorptionswärmepumpe (21, 31, 61, 71) nach dem vorgenannten Anspruch, ***gekennzeichnet durch*** einen zweiten Austreiber (23, 44, 64, 80), in dem ein Teilstrom der reichen Lösung parallel zu dem Austreiber (22, 36, 63, 75) Wärme aus der reichen Lösung zwischen ersten Absorber (26, 43, 65, 77) und Drosselelement (24, 35, 62) aufnimmt.

3. Sorptionswärmepumpe (21, 31, 61, 71) nach einem der vorgenannten Ansprüche, ***gekennzeichnet durch*** einen Lösungswärmeübertrager (25, 33, 66, 78), in dem die arme Lösung vor Eintritt in den ersten Absorber (26, 43, 65, 77) Wärme aus der reichen Lösung zwischen ersten Absorber (26, 43, 65, 77) und Drosselelement (24, 35, 62) aufnimmt.

4. Sorptionswärmepumpe (31) nach einem der vorgenannten Ansprüche, ***gekennzeichnet durch*** einen dritten Absorber (32), in dem die reiche Lösung vor dem Drosselelement (35) einen Teilstrom des Kältemittels absorbiert und dabei Wärme an einen Teilstrom der armen Lösung nach Austritt aus dem Austreiber (36) abgibt.

5. Sorptionswärmepumpe (51, 61, 71) nach einem der vorgenannten Ansprüche, ***gekennzeichnet durch*** einen Verdichter (52, 73), der das gasförmige Kältemittel in den ersten Absorber (53, 65, 77) fördert.

6. Sorptionswärmepumpe (71) nach dem vorgenannten Anspruch, ***gekennzeichnet durch*** einen zweiten Verdichter (72), der das gasförmige Kältemittel vorverdichtet, und einen dritten Austreiber (74), in dem das vorverdichtete Kältemittel vor Eintritt in den Verdichter (73) an einen Teilstrom der reichen Lösung vor Eintritt in den Austreiber (75) Wärme abgibt.

7. Sorptionswärmepumpe (1, 21, 31) nach einem der Ansprüche 1 bis 4, ***gekennzeichnet durch*** einen Verflüssiger (5, 42), der das Kältemittel nach Austritt aus dem Austreiber (22, 36) verflüssigt, eine Kältemittelpumpe (6, 37), die das flüssige Kältemittel nach Austritt aus dem Verflüssiger (5, 42) in einen Verdampfer (38) pumpt, in dem es vor Eintritt in den ersten Absorber (2, 26, 43) einen zweiten von außen zugeführten Wärmestrom aufnimmt und verdampft.

8. Sorptionswärmepumpe (1, 21, 31, 51, 61, 71) nach einem der vorgenannten Ansprüche, ***dadurch gekennzeichnet, dass*** das Lösungsmittel Wasser und das Kältemittel Ammoniak ist.

9. Sorptionskreisprozess mit einem gasförmigen Kältemittel und einem flüssigen Lösungsmittel, einer armen und einer reichen Lösung, wobei die arme und die reiche Lösung einphasige Mischungen des Lösungsmittels und des Kältemittels sind, und wobei die arme Lösung das Kältemittel absorbiert und dabei Wärme abgibt, dann die reiche Lösung erst entspannt wird, anschließend einen dem Sorptionskreisprozess von außen zugeführten Wärmestrom aufnimmt und dabei das Kältemittel austreibt, dann das Kältemittel aus der reichen Lösung ausgetrieben und gefördert, und die arme Lösung gepumpt und der Sorptionskreisprozess geschlossen wird, ***dadurch gekennzeichnet, dass*** vor Absorption des Kältemittels ein Teilstrom der armen Lösung und ein Teilstrom des Kältemittels abgezweigt und parallel zur Absorption des Kältemittels der Teilstrom der armen Lösung den Teilstrom des Kältemittels absorbiert und dabei an die arme Lösung vor Absorption des Kältemittels Wärme abgibt.

## Claims

1. A sorption heat pump (1, 21, 31, 51, 61, 71) having: a gaseous refrigerant and a liquid solvent; a depleted solution and an enriched solution, the depleted and enriched solutions being single-phase mixtures of the solvent and the refrigerant; a first absorber (2, 26, 43, 53, 65, 77), in which the depleted solution absorbs the refrigerant and emits heat in the process; a throttle element (8, 24, 35, 62), which expands the enriched solution after exit from the first absorber (2, 26, 43, 53, 65, 77); a generator (4, 22, 36, 63, 75), in which, after exit from the throttle element (8, 24, 35, 62), the enriched solution absorbs an externally supplied heat flow and in the process expels the refrigerant; a conveying element, which conveys the refrigerant into the first absorber (2, 26, 43, 53, 65, 77) after exit from the generator (4, 22, 36, 63, 75); and a pump, which pumps the depleted solution into the first absorber (2, 26, 43, 53, 65, 77) after exit from the generator (4, 22, 36, 63, 75), **characterised by** a second absorber (11, 79) which is arranged in parallel with the first absorber (2, 26, 43, 53, 65, 77) and in which a partial flow of the depleted solution, before entry into the first absorber (2, 26, 43, 53, 65, 77), absorbs a partial flow of the refrigerant before entry into the absorber (2, 26, 43, 53, 65, 77) and in the process emits heat to the depleted solution before entry into the first absorber (2, 26, 43, 53, 65, 77).

2. The sorption heat pump (21, 31, 61, 71) according to the preceding claim, **characterised by** a second generator (23, 44, 64, 80), in which a partial flow of the enriched solution, in parallel with the generator (22, 36, 63, 75), absorbs heat from the enriched solution between the first absorber (26, 43, 65, 77) and the throttle element (24, 35, 62).

3. The sorption heat pump (21, 31, 61, 71) according to any one of the preceding claims, **characterised by** a solution heat exchanger (25, 33, 66, 78), in which the depleted solution, before entry into the first absorber (26, 43, 65, 77), absorbs heat from the enriched solution between the first absorber (26, 43, 65, 77) and the throttle element (24, 35, 62).

4. The sorption heat pump (31) according to any one of the preceding claims, **characterised by** a third absorber (32), in which the enriched solution, upstream of the throttle element (35), absorbs a partial flow of the refrigerant and in the process emits heat to a partial flow of the depleted solution after exit from the generator (36).

5. The sorption heat pump (51, 61, 71) according to any one of the preceding claims, **characterised by** a compressor (52, 73), which conveys the gaseous refrigerant into the first absorber (53, 65, 77).

6. The sorption heat pump (71) according to the preceding claim, **characterised by** a second compressor (72), which pre-compresses the gaseous refrigerant, and a third generator (74), in which the pre-compressed refrigerant, before entry into the compressor (73), emits heat to a partial flow of the enriched solution before entry into the generator (75).

7. The sorption heat pump (1, 21, 31) according to any one of Claims 1 to 4, **characterised by** a condenser (5, 42), which condenses the refrigerant after exit from the generator (22, 36); a refrigerant pump (6, 37), which pumps the liquid refrigerant, after exit from the condenser (5, 42), into an evaporator (38), in which it absorbs an externally supplied second heat flow and evaporates before entry into the first absorber (2, 26, 43) .

8. The sorption heat pump (1, 21, 31, 51, 61, 71) according to any one of the preceding claims, **characterised in that** the solvent is water and the refrigerant is ammonia.

9. A sorption circuit process having: a gaseous refrigerant and a liquid solvent; a depleted and an enriched solution, the depleted and enriched solutions being single-phase mixtures of the solvent and the refrigerant; in which the depleted solution absorbs the refrigerant and emits heat in the process, then the enriched solution is first expanded, then absorbs a heat flow supplied externally to the sorption circuit process and in the process expels the refrigerant, then the refrigerant is expelled from the enriched solution and conveyed, and the depleted solution is pumped, and the sorption circuit process is closed, **characterised in that** before absorption of the refrigerant, a partial flow of the depleted solution and a partial flow of the refrigerant are branched off and, in parallel with the absorption of the refrigerant, the partial flow of the depleted solution absorbs the partial flow of the refrigerant and in the process emits heat to the depleted solution before absorption of the refrigerant.

## Revendications

1. Thermopompe à sorption (1, 21, 31, 51, 61, 71), avec un agent réfrigérant gazeux et un solvant liquide, une solution pauvre et une solution riche, la solution pauvre et la solution riche étant des mélanges monophasés du solvant et de l'agent réfrigérant, et avec un premier absorbeur (2, 26, 43, 53, 65, 77), dans lequel la solution pauvre absorbe l'agent réfrigérant et restitue de la chaleur à cet effet, un élément d'étranglement (8, 24, 35, 62), qui détend la solution riche après sa sortie du premier absorbeur (2, 26, 43, 53, 65, 77), un extracteur (4, 22, 36, 63, 75), dans lequel, après sa sortie de l'élément d'étranglement (8, 24, 35, 62), la solution riche assimile un flux thermique alimenté à partir de l'extérieur et expulse à cet effet l'agent réfrigérant, un élément de convoyage, qui convoie l'agent réfrigérant dans le premier absorbeur (2, 26, 43, 53, 65, 77), après sa sortie de l'extracteur (4, 22, 36, 63, 75), et une pompe, qui pompe la solution pauvre dans le premier absorbeur (2, 26, 43, 53, 65, 77), après sa sortie de l'extracteur (4, 22, 36, 63, 75), **caractérisée par** un deuxième absorbeur (11, 79), placé à la parallèle du premier absorbeur (2, 26,43, 53,65, 77), dans lequel un flux partiel de la solution pauvre absorbe avant l'entrée dans le premier absorbeur (2, 26, 43, 53, 65, 77) un flux partiel de l'agent réfrigérant avant son entrée dans l'absorbeur (2, 26, 43, 53, 65, 77) et restitue à cet effet de la chaleur à la solution pauvre, avant son entrée dans le premier absorbeur (2, 26, 43, 53, 65, 77).

2. Thermopompe à sorption (21, 31, 61, 71) selon la revendication précédente, **caractérisée par** un deuxième extracteur (23, 44, 64, 80), dans lequel un flux partiel de la solution riche assimile à la parallèle de l'extracteur (22, 36, 63, 75) de la chaleur à partir de la solution riche, entre le premier absorbeur (26, 43, 65, 77) et l'élément d'étranglement (24, 35, 62).

3. Thermopompe à sorption (21, 31, 61, 71) selon l'une quelconque des revendications précédentes, **caractérisée par** un échangeur de chaleur de solution (25, 33, 66, 78), dans lequel, avant son entrée dans le premier absorbeur (26, 43, 65, 77), la solution pauvre assimile de la chaleur à partir de la solution riche, entre le premier absorbeur (26, 43, 65, 77) et l'élément d'étranglement (24, 35, 62).

4. Thermopompe à sorption (31) selon l'une quelconque des revendications précédentes, **caractérisée par** un troisième absorbeur (32), dans lequel, en amont de l'élément d'étranglement (35), la solution riche absorbe un flux partiel de l'agent réfrigérant et restitue à cet effet de la chaleur à un flux partiel de la solution pauvre, après sa sortie de l'extracteur (36) .

5. Thermopompe à sorption (51, 61, 71) selon l'une quelconque des revendications précédentes, **caractérisée par** un compresseur (52, 73), qui convoie l'agent réfrigérant gazeux dans le premier absorbeur (53, 65, 77).

6. Thermopompe à sorption (71) selon la revendication précédente, **caractérisée par** un deuxième compresseur (72), qui précomprime l'agent réfrigérant et par un troisième extracteur (74), dans lequel, avant son entrée dans le compresseur (73), l'agent réfrigérant précomprimé restitue de la chaleur à un flux partiel de la solution riche, avant son entrée dans l'extracteur (75).

7. Thermopompe à sorption (1, 21, 31) selon l'une quelconque des revendications 1 à 4, **caractérisée par** un condenseur (5, 42), qui liquéfie l'agent réfrigérant après sa sortie de l'extracteur (22, 36), une pompe à agent réfrigérant (6, 37), qui après sa sortie du condenseur (5, 42), pompe l'agent réfrigérant dans un évaporateur (38), dans lequel, avant son entrée dans le premier absorbeur (2, 26, 43), il assimile et évapore un deuxième flux thermique alimenté par l'extérieur.

8. Thermopompe à sorption (1, 21, 31, 51, 61, 71) selon l'une quelconque des revendications précédentes, **caractérisé en ce que** le solvant est de l'eau et l'agent réfrigérant est de l'ammoniac.

9. Processus de circuit de sorption avec un agent réfrigérant gazeux et un solvant liquide, une solution pauvre et une solution riche, la solution pauvre et la solution riche étant des mélanges monophasés du solvant et de l'agent réfrigérant, et la solution pauvre absorbant l'agent réfrigérant et restituant à cet effet de la chaleur, la solution riche n'étant ensuite détendue qu'après, assimilant par la suite un flux thermique alimenté par l'extérieur vers le processus de circuit de sorption et expulsant à cet effet l'agent réfrigérant, l'agent réfrigérant étant ensuite expulsé de la solution riche et convoyé, et la solution pauvre étant pompée et le processus de circuit de sorption étant fermé, **caractérisé en ce qu'**avant l'absorption de l'agent réfrigérant, un flux partiel de la solution pauvre et un flux partiel de l'agent réfrigérant est dérivé parallèlement à l'absorption de l'agent réfrigérant, le flux partiel de la solution pauvre absorbe le flux partiel de l'agent réfrigérant et restitue à cet effet de la chaleur à la solution pauvre, avant l'absorption de l'agent réfrigérant.
